# EUROPEAN PATENT APPLICATION

(11) **EP 2 184 693 A1**
(43) Date of publication of application: **12.05.2010**
(21) Application number: 09252367.9
(22) Date of filing: 07.10.2009
(51) Int. Cl.: G06F 17/30, H04N 5/00, H04N 7/173

(54) **Apparatus, method, and program for retrieving multimedia content related information based on content associated metadata**

(30) Priority: 07.11.2008 JP 2008286674
(71) Applicant: Sony Corporation, Tokyo 108-0075 (JP)
(72) Inventor: Sakai, Shinji, Tokyo 108-0075 (JP)
(74) Representative: Carlick, Anthony Julian

(57) **Abstract**

An information processing apparatus includes: a content associated information acquiring unit that acquires content associated information on a content associated with content data that is data for the content; a content related information acquiring unit that allows a predetermined searching unit to search information not associated with the content data for information on the content, as content associated information acquired by the content associated information acquiring unit is a search condition, and acquires information retrieved as a result of the search from the searching unit as content related information; a display control unit that displays content associated information acquired by the content associated information acquiring unit and content related information acquired by the content related information acquiring unit on a display unit; and a keyword registration unit that registers at least a part of the content associated information displayed on the display unit as a keyword for searching a recommended content in accordance with an instruction by a user.

## Description

The present invention relates to an information processing apparatus, an information processing method, and an information processing program, which are preferable for application in acquiring and displaying information on a piece of music to be reproduced, for example.

In recent years, with music data that is data for a piece of music, information on that piece of music is associated, such as the jacket picture, song title, artist name, and album title of the piece of music (such information is also referred to as music associated information). Such a music reproducing apparatus is proposed, which acquires and displays music associated information on a display screen in reproducing music data (for example, see JP-A-2007-59009 (Patent Document 1)).

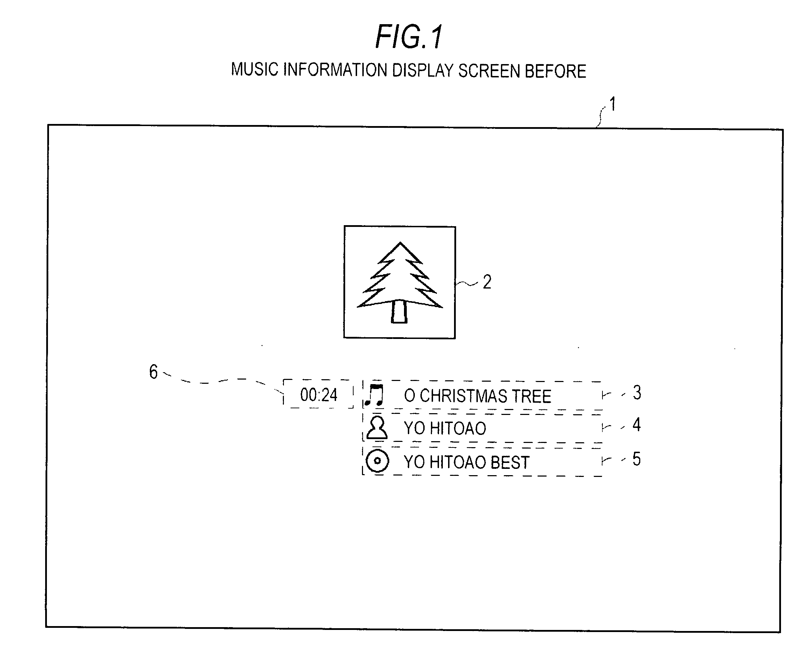

In addition, as such a music reproducing apparatus, for example, there are personal computers and television sets. Fig. 1 shows an exemplary music information display screen 1 to be displayed on the screen of a television set when the television set reproduces music data.

In the center of the music information display screen 1, a jacket picture display area 2 is provided, in which a jacket picture image associated with music data is displayed. In addition, below that area, a song title display area 3, an artist name display area 4, and an album title display area 5 are provided, in which a song title, an artist name, and an album title associated with the music data are displayed, respectively. Moreover, on the left side of the song title display area 3, an elapsed time display area 6 is provided. The area displays the elapsed time indicating which position of the music data is currently being reproduced.

As described above, the television set described above is configured to acquire and display music associated information associated with music data (the jacket picture, the song title, the artist name, and the album title) in reproducing the music data.

As described above, with music data, only music associated information such as the jacket picture, the song title, the artist name, and the album title is associated.

Therefore, the apparatus described above is capable of only acquiring and displaying this music associated information.

Then, it is considered that a large number of items of information on a piece of music can be offered to a user when information on the piece of music in addition to music associated information associated with music data can be also acquired and displayed.

Thus, it is desirable to propose an information processing apparatus, an information processing method, and an information processing program, which are capable of offering a large number of items of information on a content to a user.

An embodiment of the invention is directed to an information processing apparatus including: a content associated information acquiring unit that acquires content associated information on a content associated with content data that is data for the content; a content related information acquiring unit that allows a predetermined searching unit to search information not associated with the content data for information on the content, as content associated information acquired by the content associated information acquiring unit is a search condition, and acquires information retrieved as a result of the search from the searching unit as content related information; a display control unit that displays content associated information acquired by the content associated information acquiring unit and content related information acquired by the content related information acquiring unit on a display unit; and a keyword registration unit that registers at least a part of the content associated information displayed on the display unit as a keyword for searching a recommended content in accordance with an instruction by a user.

With this configuration, the information processing apparatus according to the embodiment of the invention is capable of acquiring and displaying information on a content, the information being associated with data for the content, as well as information on the content, the information being not associated with data for the content.

According to the embodiment of the invention, information on a content, the information being associated with data for the content, as well as information on the content, the information being not associated with data for the content, can be acquired and displayed, and an information processing apparatus, an information processing method, and an information processing program can be implemented, which are capable of offering a large number of items of information on the content to a user.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Fig. 1 is a schematic diagram depicting a music information display screen before;
Fig. 2 is a schematic diagram depicting the configuration of a music reproducing system;
Fig. 3 is a block diagram depicting the internal configuration of a television set;
Fig. 4 is a schematic diagram depicting a music information display screen;
Fig. 5 is a schematic diagram depicting a broadcast program detail information display screen;
Fig. 6 is a schematic diagram depicting an option screen;
Fig. 7 is a schematic diagram depicting a broadcast program recommendation keyword registration completion screen;
Fig. 8 is a flowchart depicting the operation process steps; and
Fig. 9 is a schematic diagram depicting a broadcast program recommendation keyword registration keyboard screen.

Hereinafter, embodiments of the invention will be described in detail with reference to the drawings. In addition, descriptions will be made in the following order.
1. Embodiment
2. Other embodiments

### 1. Embodiment

### 1-1. Configuration of a music reproducing system

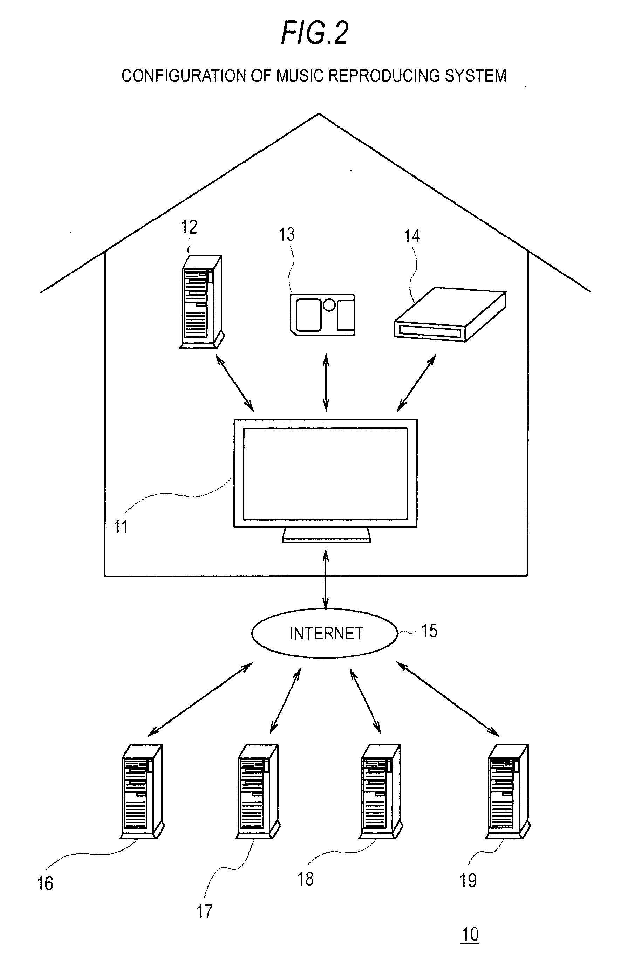

The configuration of a music reproducing system 10 will be described with reference to Fig. 2. This music reproducing system 10 has a television set 11. This television set 11 has a function of receiving and reproducing a television broadcast as well as has a function of acquiring and reproducing music data.

The television set 11 is connected to a DLNA (Digital Living Network Alliance) server 12 through a LAN (Local Area Network), for example. The DLNA server 12 is a server compliant with the DLNA specifications, which is equipped in a house to store music data. Then, the television set 11 is configured to acquire music data from the DLNA server 12 and reproduce the music data.

In addition, the television set 11 has a slot (not shown) for a memory card 13, and is connected to the memory card 13 inserted in the slot. Here, the memory card 13 stores music data. Then, the television set 11 is also configured to acquire music data from the memory card 13, and reproduce the music data.

Moreover, the television set 11 is connected to a multi card reader 14 having a slot (not shown) for various memory cards. Then, the television set 11 is also configured to acquire music data from a memory card inserted into the slot of the multi card reader 14 through the multi card reader 14, and reproduce the music data.

Moreover, the television set 11 is connected to the Internet 15. Then, the television set 11 is also configured to acquire music data from a music providing server (not shown) on the Internet 15, and reproduce the music data.

As described above, in the music reproducing system 10, the television set 11 is configured to acquire music data from any one of the DLNA server 12, the memory card 13, the multi card reader 14, and the music providing server on the Internet 15, and reproduce the music data.

In addition, in the music reproducing system 10, the television set 11 is also configured to acquire and display information on a piece of music being reproduced from an encyclopedia providing server 16, an image search server 17, a lyrics providing server 18, and a music retail server 19 on the Internet 15. In addition, a method of acquiring information on a piece of music from these servers and displaying the information by the television set 11 will be described later.

### 1-2. Internal configuration of the television set

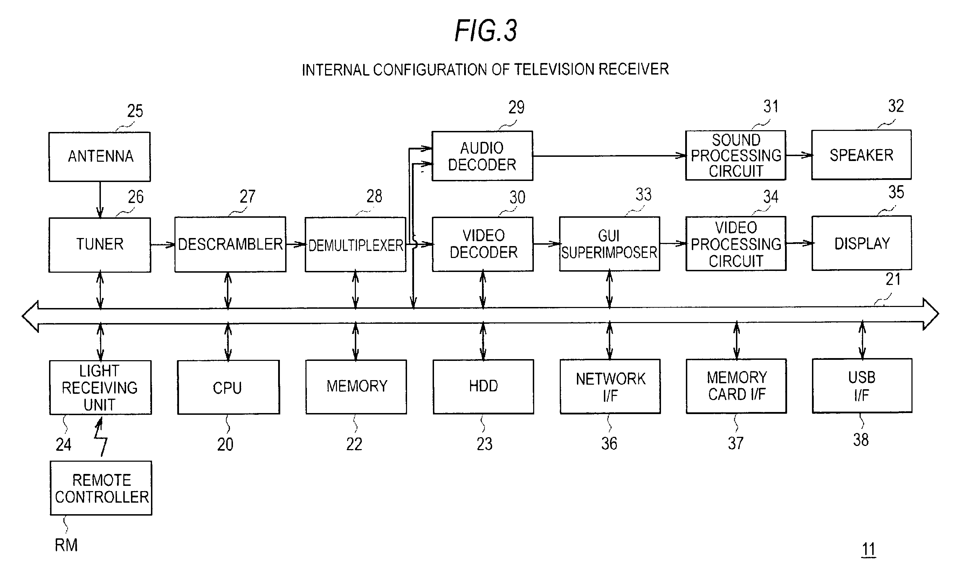

Next, the internal configuration of the television set 11 in the music reproducing system 10 will be described with reference to Fig. 3. The television set 11 has the receiving and reproducing function and the recording function of a digital broadcast.

In other words, in the television set 11, a CPU (Central Processing Unit) 20 executes various processes in accordance with a program stored in a memory 22 or a HDD (hard disk drive) 23 connected through a bus 21. In addition, the CPU 20 is configured to receive an infrared signal inputted from a remote controller RM through a light receiving unit 24 (more specifically, a signal corresponding to the manipulation of the remote controller RM) as a command. Then, the CPU 20 controls the operations of the individual units according to this command.

The CPU 20 of the television set 11 receives digital broadcast signals through an antenna 25, and inputs the signals to a tuner 26. Under control conducted by the CPU 20, the tuner 26 extracts broadcast signals of a predetermined channel (for example, a channel specified through the remote controller RM) from the digital broadcast signals. The tuner 26 applies a demodulation process to the extracted broadcast signals, and outputs the resulting transport streams of the predetermined channel to a descrambler 27.

Under control conducted by the CPU 20, the descrambler 27 uses a decode key stored in advance in a predetermined IC card (not shown) mounted on the television set 11 to descramble the transport streams inputted from the tuner 26. Then, the descrambler 27 outputs the descrambled transport streams to a demultiplexer 28.

Under control conducted by the CPU 20, the demultiplexer 28 separates audio data and video data from the descrambled transport streams inputted from the descrambler 27. Then, the demultiplexer 28 outputs the separated audio data to an audio decoder 29, and outputs the separated video data to a video decoder 30.

Under control conducted by the CPU 20, the audio decoder 29 decodes the audio data inputted from the demultiplexer 28, and outputs the resulting audio data to a sound processing circuit 31.

The sound processing circuit 31 applies D/A (Digital/Analog) conversion and amplifying processing to the audio data inputted from the audio decoder 29, and outputs the resulting audio signals to a speaker 32. Consequently, from the speaker 32, audio based on the audio signals, that is, audio of a broadcast program is outputted.

On the other hand, under control conducted by the CPU 20, the video decoder 30 decodes the video data inputted from the demultiplexer 28, and outputs the resulting video data to a GUI (Graphical User Interface) superimposer 33.

The GUI superimposer 33 superimposes graphic data such as OSD (On Screen Display) on the video data inputted from the video decoder 30, and outputs the resulting video date to a video processing circuit 34.

The video processing circuit 34 applies predetermined image processing and D/A (Digital/Analog) conversion to the video data inputted from the GUI superimposer 33, and outputs the resulting video signals to a display 35. Consequently, video based on the video signals, that is, video of a broadcast program is displayed on the display 35.

As described above, the television set 11 is configured to receive a digital broadcast, and reproduces a broadcast program in the digital broadcast.

In addition, as similar to the descriptions above, the CPU 20 receives a digital broadcast in response to the manipulation of the remote controller RM, acquires the transport streams of a predetermined channel, and stores them in the HDD 23 as the video and audio data of a broadcast program.

As described above, the television set 11 is also configured to receive a digital broadcast, and records a broadcast program in the digital broadcast.

In addition, the television set 11 has a function of acquiring EPG (Electric Program Guide) information that is electronic broadcast program guide information. Hereinafter, the function of acquiring EPG information will be described.

As similar to the descriptions above, the CPU 20 receives a digital broadcast, descrambles the acquired transport streams, and outputs them to the demultiplexer 28. Under control conducted by the CPU 20, the demultiplexer 28 separates audio data and video data as well as separates EPG data from the descrambled transport streams. Then, the demultiplexer 28 stores the separated EPG data in the memory 22 or the HDD 23.

After that, the CPU 20 recognizes that an instruction is made to display an electronic program guide through the manipulation of the remote controller RM, and then the CPU 20 generates electronic program guide data based on the EPG data stored in the memory 22 or the HDD 23, and outputs it to the GUI superimposer 33. Under control conducted by the CPU 20, the GUI superimposer 33 generates electronic program guide screen data based on the inputted electronic program guide data, and outputs it to the video processing circuit 34. The video processing circuit 34 applies predetermined processing to the electronic program guide screen data inputted from the GUI superimposer 33, and outputs it to the display 35. Consequently, an electronic program guide screen is displayed on the display 35.

As described above, the television set 11 is configured to display an electronic program guide based on the EPG information acquired from digital broadcast signals in response to the manipulation of the remote controller RM.

Moreover, the television set 11 has a music reproducing function that acquires and reproduces music data. Hereinafter, the music reproducing function will be described.

The CPU 20 acquires music data from the DLNA server 12 connected through a network I/F (the interface) 36, and outputs it to the audio decoder 29.

Then, under control conducted by the CPU 20, the audio decoder 29 decodes the music data inputted through the network I/F 36, and outputs the resulting audio data to the sound processing circuit 31. The sound processing circuit 31 applies D/A (Digital/Analog) conversion and amplifying processing to the audio data inputted from the audio decoder 29, and outputs the resulting audio signal to the speaker 32. Consequently, from the speaker 32, audio based on the audio signals, that is, audio of a piece of music is outputted.

In addition, the CPU 20 acquires music data from the memory card 13 connected through a memory card I/F 37, and outputs it to the audio decoder 29.

Then, under control conducted by the CPU 20, the audio decoder 29 decodes the music data inputted from the memory card I/F 37, and outputs the resulting audio data to the sound processing circuit 31. The sound processing circuit 31 applies D/A (Digital/Analog) conversion and amplifying processing to the audio data inputted from the audio decoder 29, and outputs the resulting audio signal to the speaker 32. Consequently, from the speaker 32, audio based on the audio signals, that is, audio of a piece of music is outputted.

Moreover, the CPU 20 acquires music data from the memory card inserted into the multi card reader 14 connected through a USB (Universal Serial Bus) I/F 38, and outputs it to the audio decoder 29.

Then, under control conducted by the CPU 20, the audio decoder 29 decodes the music data inputted through the USB I/F 38, and outputs the resulting audio data to the sound processing circuit 31. The sound processing circuit 31 applies D/A (Digital/Analog) conversion and amplifying processing to the audio data inputted from the audio decoder 29, and outputs the resulting audio signal to the speaker 32. Consequently, from the speaker 32, audio based on the audio signals, that is, audio of a piece of music is outputted.

Moreover, the CPU 20 acquires music data from the music providing server on the Internet 15 connected through the network I/F 36, and stores it in the HDD 23.

Then, the CPU 20 reads the music data acquired from the music providing server on the Internet 15 out of the HDD 23, and outputs it to the audio decoder 29. Under control conducted by the CPU 20, the audio decoder 29 decodes the music data inputted from the HDD 23, and outputs the resulting audio data to the sound processing circuit 31. The sound processing circuit 31 applies D/A (Digital/Analog) conversion and amplifying processing to the audio data inputted from the audio decoder 29, and outputs the resulting audio signal to the speaker 32. Consequently, from the speaker 32, audio based on the audio signals, that is, audio of a piece of music is outputted.

As described above, the television set 11 is configured to acquire and reproduce music data from any one of the DLNA server 12, the memory card 13, the multi card reader 14, and the music providing server on the Internet 15 in response to the manipulation of the remote controller RM.

### 1-3. Display of information on a piece of music

Moreover, the television set 11 has the function that when a user makes an instruction to reproduce a given piece of music through the manipulation of the remote controller RM, music data for the piece of music is reproduced as well as information on the piece of music is acquired and displayed on the display 35. Hereinafter, the function of displaying information on a piece of music will be described.

When an instruction is made to reproduce a given piece of music through the manipulation of the remote controller RM, the CPU 20 acquires music data for the piece of music from any one of the DLNA server 12, the memory card 13, the multi card reader 14, and the music providing server on the Internet 15.

Here, the music data is supposed to be music data in the MP3 (MPEG-1 Audio Layer-3) format, for example. Music data in the MP3 format is added with an ID3 tag that is the area to store information on a piece of music. For example, in the ID3 tag, the song title, the artist name, the album title, the genre, the sales year, the comments, the track numbers, and the jacket picture image are stored. Because it can be said that information stored in the ID3 tag is music associated information associated with music data, information stored in the ID3 tag is also referred to as music associated information in the description below. In addition, although a personal computer is sometimes used to make an input or edit to information stored in the ID3 tag, it is supposed here that the song title, the artist name, the album title, and the jacket picture image are stored in advance in the ID3 tag as music associated information.

Then, the CPU 20 starts to reproduce the acquired music data as well as acquires music associated information from the ID3 tag added to the music data and temporarily stores the music associated information in the memory 22.

Then, the CPU 20 reads an artist name as music associated information out of the memory 22. In addition, the CPU 20 reads EPG data acquired in advance from the digital broadcast signals out of the memory 22 or the HDD 23. For example, EPG data is stored with the broadcast station name, the channel number, the broadcast date and time, the broadcast program name, the genre, the broadcast program summary, the broadcast program details, the cast, video information, and audio information as broadcast program information about every broadcast program to be scheduled for broadcasting.

The CPU 20 searches broadcast program information in the read EPG data for broadcast program information about a broadcast program related to the artist, as the artist name is a search condition. As the result of that search, the CPU 20 acquires broadcast program information such as a broadcast program in which the artist appears or a broadcast program in which the artist's music is played, for example. Then, the CPU 20 acquires the broadcast program information retrieved as the search result as music related information on a piece of music, and temporarily stores the broadcast program information in the memory 22. Here, the term music related information means information on a piece of music, the information being not associated with music data.

In addition, the CPU 20 reads the artist name as music associated information out of the memory 22. Then, the CPU 20 sends the artist name to an encyclopedia providing server 16 running a predetermined online participating encyclopedia site on the Internet 15 through the network I/F 36.

On this encyclopedia site, character information on all keywords appears as an encyclopedia. The encyclopedia providing server 16 is configured to search character information appearing on the encyclopedia site as the keyword received from a connected device over the Internet 15 is a search condition and send character information retrieved as the search result to the connected device over the Internet 15.

Therefore, at this time, the encyclopedia providing server 16 searches character information appearing on the encyclopedia site, as the artist name received from the television set 11 is a search condition. Then, the encyclopedia providing server 16 sends character information on the artist name retrieved as the search result, which is profile character information on the artist, for example, (also referred to as profile information) to the television set 11 over the Internet 15.

The CPU 20 acquires the profile information sent from the encyclopedia providing server 16 through the network I/F 36, and temporarily stores the profile information in the memory 22 as music related information.

Moreover, the CPU 20 reads the artist name as music associated information out of the memory 22, and sends the artist name to an image search server 17 running a predetermined image search site on the Internet 15 through the network I/F 36.

The image search server 17 is configured to search images on the Internet 15 as the keyword received from a connected device over the Internet 15 is a search condition, and send image information retrieved as the search result to the connected device over the Internet 15. In addition, the term image information is an address of an image on the Internet 15.

Therefore, at this time, the image search server 17 searches images on the Internet 15, as the artist name received from the television set 11 is a search condition. Then, the image search server 17 sends image information on the artist retrieved as the search result (also referred to as the artist image information) to the television set 11 over the Internet 15.

The CPU 20 acquires the artist image information sent from the image search server 17 through the network I/F 36 as music related information, and temporarily stores the artist image information in the memory 22.

Moreover, the CPU 20 reads the artist name and the song title as music associated information out of the memory 22. Then, the CPU 20 sends the artist name and the song title to a lyrics providing server 18 running a predetermined lyrics providing site on the Internet 15 through the network I/F 36.

On the lyrics providing site, character information indicating lyrics of all music appears (also referred to as lyrics information). The lyrics providing server 18 searches lyrics information appearing on the lyrics providing site, as the artist name and the song title received from a connected device over the Internet 15 are search conditions. In other words, the lyrics providing server 18 is configured to search for lyrics information about a piece of music specified by the artist name and the song title. Then, the lyrics providing server 18 sends lyrics information retrieved as the search result to the connected device over the Internet 15.

Therefore, at this time, the lyrics providing server 18 searches lyrics information appearing on the lyrics providing site, as the artist name and the song title received from the television set 11 are search conditions. Then, the lyrics providing server 18 sends the lyrics information retrieved as the search result to the television set 11 over the Internet 15.

The CPU 20 acquires the lyrics information sent from the lyrics providing server 18 as music related information through the network I/F 36, and temporarily stores the lyrics information in the memory 22.

Moreover, the CPU 20 reads the artist name and the song title as music associated information out of the memory 22. Then, the CPU 20 sends the artist name and the song title to a music retail server 19 running a predetermined music retail site on the Internet 15 through the network I/F 36.

The music retail site is configured in which to a user who has purchased or who desires to purchase a piece of music, a different user who has purchased the same piece of music recommends a different piece of music purchased by the different user as a recommended piece of music. In other words, on the music retail site, a jacket picture image of a recommended piece of music is contained in a music retail page for every piece of music to be a target for purchase (also referred to as recommended music image information), whereby a recommended piece of music is presented to the user.

The music retail server 19 receives the artist name and the song title from a connected device over the Internet 15, and then searches recommended music image information contained in the music retail site, as the artist name and the song title are search conditions. In other words, the music retail server 19 is configured to search for recommended music image information about a piece of music specified by the artist name and the song title. Then, the music retail server 19 sends the recommended music image information retrieved as the search result to the connected device over the Internet 15.

Therefore, at this time, the music retail server 19 searches recommended music image information contained in the music retail site, as the artist name and the song title received from the television set 11 are search conditions. Then, the music retail server 19 sends the recommended music image information retrieved as the search result to the television set 11 over the Internet 15.

The CPU 20 acquires the recommended music image information sent from the music retail server 19 as music related information, and temporarily stores the recommended music image information in the memory 22.

As described above, from music data for the piece of music that a user instructs to reproduce through the manipulation of the remote controller RM, the CPU 20 acquires music associated information added to the music data. Moreover, as music related information on the piece of music, the CPU 20 acquires broadcast program information, profile information, artist image information, lyrics information, and recommended music image information, which are retrieved as the music associated information is a search condition.

Then, the CPU 20 reads the acquired music associated information and music related information out of the memory 22, and outputs them to the GUI superimposer 33. In addition, the CPU 20 outputs elapsed time information indicating which position of the music data is currently being reproduced to the GUI superimposer 33. Under control conducted by the CPU 20, the GUI superimposer 33 generates music information display screen data based on the inputted music associated information, music related information, and elapsed time information, and outputs the data to the video processing circuit 34. The video processing circuit 34 applies predetermined processing to the music information display screen data inputted from the GUI superimposer 33, and outputs the resulting data to the display 35. Consequently, a music information display screen 40 based on the music associated information, music related information, and elapsed time information is displayed on the display 35.

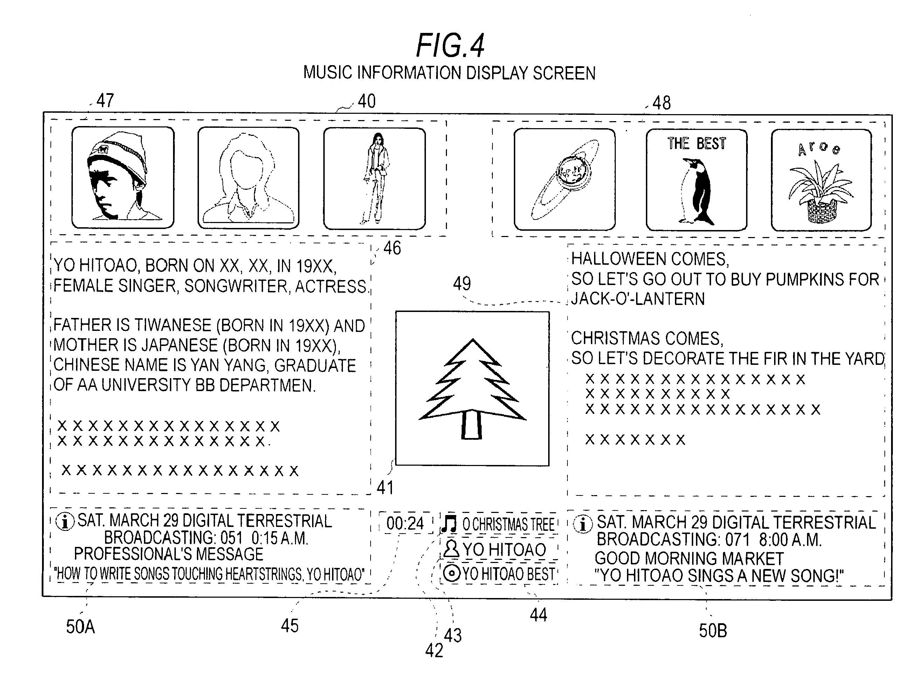

Fig. 4 shows the music information display screen 40 displayed on the display 35 at this time. On the music information display screen 40, a jacket picture display area 41 is provided in the center, in which a jacket picture image is displayed as music associated information. In addition, below that area, a song title display area 42, an artist name display area 43, and an album title display area 44 are provided, and in these areas, a song title, an artist name, and an album title are displayed, respectively, as music associated information. Moreover, an elapsed time display area 45 is provided on the left side of the song title display area 42, in which elapsed time is displayed based on elapsed time information.

Moreover, a profile display area 46 is provided on the left side of the jacket picture display area 41, in which a profile based on profile information as music related information, that is, the profile of the artist whose piece of music is being reproduced is displayed. When this profile is not fully displayed in the profile display area 46, it is configured to automatically scroll the profile for display.

Moreover, an artist image display area 47 is provided above the profile display area 46. Artist image information as music related information is address information of the image related to the artist on the Internet 15. Therefore, in the artist image display area 47, the image acquired by the CPU 20 using artist image information through the network I/F 36, that is, the image related to the artist whose piece of music is being reproduced is displayed. When there are multiple items of artist image information about a plurality of images and it is difficult to display all of these images in the artist image display area 47, it is configured to switch these images at fixed time intervals for display.

Moreover, a recommended music image display area 48 is provided on the right side of the artist image display area 47. In the recommended music image display area 48, a jacket picture image based on recommended music image information as music related information, that is, a jacket picture image of a recommended piece of music to the piece of music being reproduced is displayed. When there are multiple items of recommended music image information about a plurality of jacket picture images and it is difficult to fully display these images in the recommended music image display area 48, it is configured to switch these images at fixed time intervals for display.

Moreover, a lyrics display area 49 is provided below the artist image display area 47 and on the right side of the jacket picture display area 41, in which lyrics based on lyrics information as music related information, that is, the lyrics of the piece of music being reproduced are displayed. When it is difficult to fully display the lyrics in the lyrics display area 49, it is configured to automatically scroll the lyrics for display.

Moreover, a broadcast program information display area 50A is provided below the profile display area 46, and a broadcast program information display area 50B is provided below the lyrics display area 49, in which broadcast program information as music related information, that is, broadcast program information about a broadcast program related to the artist whose piece of music is being reproduced is displayed. More specifically, in each of the broadcast program information display area 50A and the broadcast program information display area 50B, the broadcast date and time, the channel number, the broadcast program name, and the broadcast program summary are displayed as broadcast program information. In this connection, in the broadcast program information display area 50A, it is configured to display a broadcast program on the broadcast date and time earlier than those of a broadcast program displayed in the broadcast program information display area 50B.

In addition, when there are multiple items of broadcast program information about a plurality of broadcast programs and it is difficult to fully display these items of information in the broadcast program information display area 50A and the broadcast program information display area 50B, it is configured to switch these items of broadcast program information at fixed time intervals for display. In addition, at this time, the order for display is the order of earlier broadcast date and time.

As described above, the television set 11 reproduces a piece of music as well as displays the acquired music associated information and music related information on the display 35.

As discussed so far, the television set 11 reproduces music data for the piece of music instructed to reproduce through the manipulation of the remote controller RM as well as acquires music associated information added to the music data and music related information retrieved as the acquired music associated information is a search condition. Then, the television set 11 displays the acquired music associated information and music related information on the display 35.

Therefore, the television set 11 is capable of acquiring and displaying music associated information associated with music data as well as music related information not associated with the music data, and capable of offering a large number of items of information on a piece of music to a user.

In addition, the television set 11 automatically acquires and displays music associated information as well as music related information, thereby being capable of offering information on a piece of music without forcing a user to make complicated manipulations.

In addition, the television set 11 displays music associated information as well as music related information while music data is being reproduced, thereby being capable of reproducing music data without unsatisfying a user because of few items of information to be displayed on the display 35.

In addition, the CPU 20 recognizes that a blue key (not shown) of the remote controller RM, for example, is pressed down when the music information display screen 40 is displayed, and then the CPU 20 reads broadcast program information about a broadcast program displayed in the broadcast program information display area 50A at this time out of EPG data stored in the memory 22 or the HDD 23. Then, the CPU 20 generates a broadcast program detail information display screen 60 based on the broadcast program information through the GUI superimposer 33 and the video processing circuit 34, and displays it on the display 35.

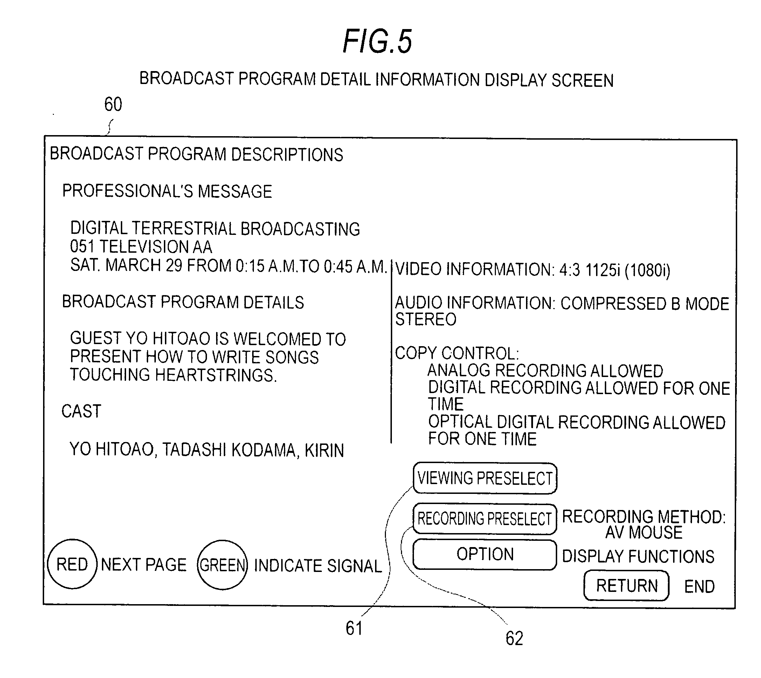

Fig. 5 shows the broadcast program detail information display screen 60 displayed at this time. On the broadcast program detail information display screen 60, the broadcast program name, the channel number, the broadcast station, the broadcast date and time, the broadcast program details, the cast, video information, and audio information are displayed as broadcast program detail information displayed in the broadcast program information display area 50A at this time.

Therefore, the television set 11 allows a user to make a simple manipulation to press down the blue key of the remote controller RM when the music information display screen 40 is displayed, whereby the user is allowed to look at broadcast program detail information on the artist whose piece of music is being reproduced.

In addition, on the broadcast program detail information display screen 60, a viewing preselect button 61 is provided. When a cursor (not shown) is used to select the viewing preselect button 61 and the enter key of the remote controller RM (not shown) is pressed down through the manipulation of the remote controller RM, the CPU 20 preselects to watch a broadcast program displayed on the broadcast program detail information display screen 60. The term viewing preselect is a function that when the broadcast date and time for a specified broadcast program arrive, the television set 11 automatically switches to the channel of the broadcast program.

At this time, the CPU 20 registers broadcast program information about the broadcast program displayed on the broadcast program detail information display screen 60 in a viewing preselect database constructed in the memory 23 or the HDD 24. Then, at the point in time when the current date and time obtained from a calendar clock (not shown) built in the television set 11 arrive at the broadcast date and time for the broadcast program registered in the viewing preselect database, the CPU 20 switches to the channel of the broadcast program, whereby the user is allowed to start watching the broadcast program.

As described above, the television set 11 allows the user to simply make a manipulation to select and press down the viewing preselect button 61 on the broadcast program detail information display screen 60 through the remote controller RM, whereby a broadcast program displayed on the broadcast program detail information display screen 60 can be preselected for watching. Therefore, the television set 11 allows the user to make a simple manipulation when the broadcast program detail information display screen 60 is displayed, whereby a broadcast program related to the artist whose piece of music is being reproduced can be preselected for watching.

Moreover, on the broadcast program detail information display screen 60, a recording preselect button 62 is provided. When the cursor is used to select the recording preselect button 62 through the manipulation of the remote controller RM and the enter key of the remote controller RM is pressed down, the CPU 20 preselects to record a broadcast program displayed on the broadcast program detail information display screen 60. The term recording preselect is a function that the broadcast date and time for the specified broadcast program arrive and then the television set 11 automatically records the broadcast program.

At this time, the CPU 20 registers broadcast program information about the broadcast program displayed on the broadcast program detail information display screen 60 in a recording preselect database constructed in the memory 23 or the HDD 24. Then, at the point in time when the current date and time obtained by the calendar clock arrive at the broadcast date and time for the broadcast program registered in the recording preselect database, the CPU 20 receives broadcasting of the broadcast program, and starts recording the broadcast program. Then, at the point in time when broadcasting of the broadcast program registered in the recording preselect database is finished, the CPU 20 automatically ends recording the broadcast program.

As described above, the television set 11 allows the user to make a simple manipulation to select and press down the recording preselect button 62 through the remote controller RM on the broadcast program detail information display screen 60, whereby a broadcast program displayed on the broadcast program detail information display screen 60 can be preselected for recording. Therefore, the television set 11 allows the user to make a simple manipulation when the broadcast program detail information display screen 60 is displayed, whereby a broadcast program related to the artist whose piece of music is being reproduced can be preselected for recording.

Moreover, at this time, the CPU 20 recognizes that a red key of the remote controller RM (not shown), for example, is pressed down, and then the CPU 20 reads broadcast program information about the next broadcast program out of EPG data stored in the memory 22 or the HDD 23. In this case, the term broadcast program information about the next broadcast program is broadcast program information about a broadcast program displayed in the broadcast program information display area 50B. Then, the CPU 20 switches the descriptions to be displayed on the broadcast program detail information display screen 60 to detail information about the next broadcast program based on broadcast program information, whereby the user is allowed to look at detail information about the next broadcast program.

Then, the CPU 20 is configured to switch the descriptions to be displayed on the broadcast program detail information display screen 60 to detail information about the next broadcast program every time when the red key of the remote controller RM is pressed down.

Moreover, the CPU 20 recognizes that an option key of the remote controller RM, for example (not shown), is pressed down when the music information display screen 40 is displayed, and then the CPU 20 reads option screen data stored in the memory 22 or the HDD 23. Then, the CPU 20 generates an option screen 70 based on the option screen data through the GUI superimposer 33 and the video processing circuit 34, and lays it on the music information display screen 40 to display it on the display 35.

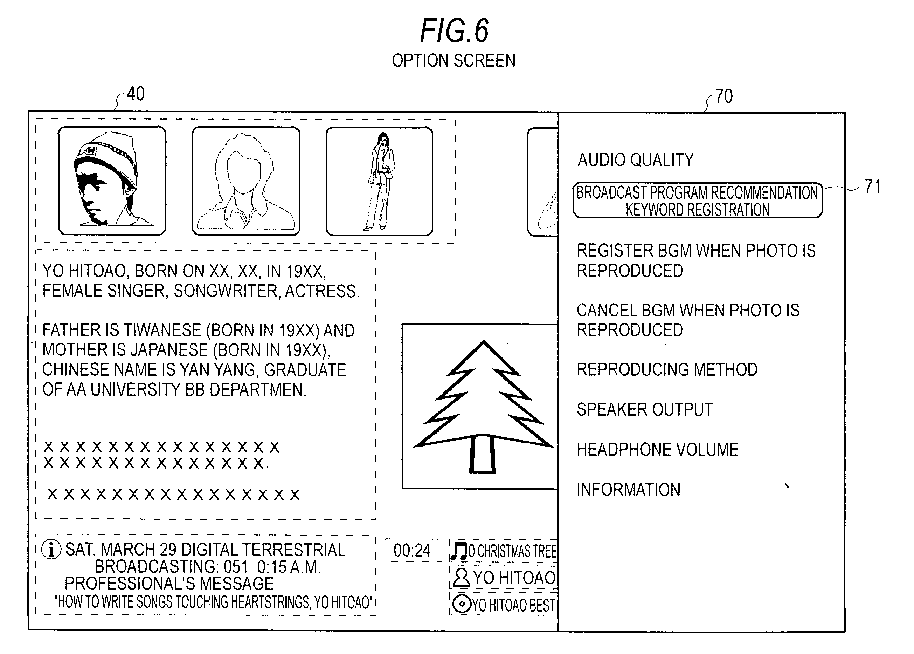

Fig. 6 shows the music information display screen 40 and the option screen 70 displayed at this time. The option screen 70 is displayed so as to be laid on the right side of the music information display screen 40. On the option screen 70, a broadcast program recommendation keyword registration menu 71 is provided.

The term broadcast program recommendation keyword registration is a function that the television set 11 automatically notifies the user of a broadcast program related to the keyword registered by the user as a recommended broadcast program.

The CPU 20 recognizes that the cursor is used to select the broadcast program recommendation keyword registration menu 71 through the manipulation of the remote controller RM and the enter key of the remote controller RM is pressed down, and then the CPU 20 acquires the artist name currently displayed in the artist name display area 43.

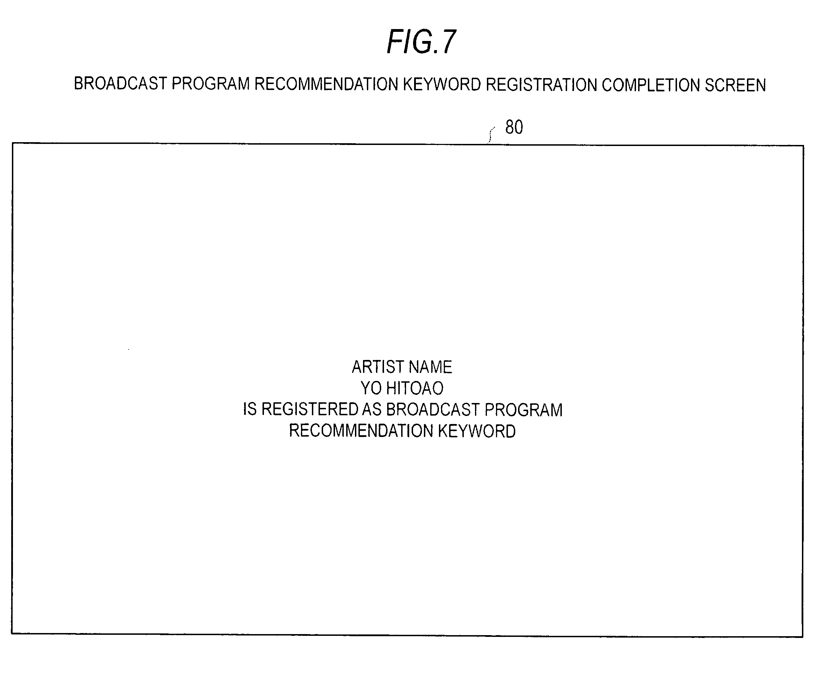

Then, the CPU 20 registers the acquired artist name as a broadcast program recommendation keyword in a broadcast program recommendation keyword database constructed in the memory 22 or the HDD 23. Then, the CPU 20 reads broadcast program recommendation keyword registration completion screen data stored in the memory 22 or the HDD 23. Then, the CPU 20 generates a broadcast program recommendation keyword registration completion screen 80 shown in Fig. 7 based on the artist name and its broadcast program recommendation keyword registration completion screen data acquired through the GUI superimposer 33 and the video processing circuit 34, and displays it on the display 35.

After that, the CPU 20 acquires broadcast program information about a broadcast program related to the keyword registered in the broadcast program recommendation keyword database from EPG data while the user is watching a digital broadcast. Then, the CPU 20 notifies the user of the acquired broadcast program information as a recommended broadcast program by displaying it on the display 35, for example.

As described above, the television set 11 allows the user to make a manipulation to select and determine the broadcast program recommendation keyword registration menu 71 on the option screen 70 through the remote controller RM, whereby the artist name whose piece of music is being reproduced can be registered as the broadcast program recommendation keyword. Therefore, the television set 11 allows the user to make a simple manipulation when the option screen 70 is displayed, whereby the artist name whose piece of music is being reproduced can be registered as the broadcast program recommendation keyword.

As described above, the television set 11 is instructed to reproduce a given piece of music, and then the television set 11 allows the user to make a simple manipulation when the music information display screen 40 is displayed, whereby the television set 11 allows the user to use various functions with the use of information on the piece of music being reproduced.

### 1-4. Operation process steps

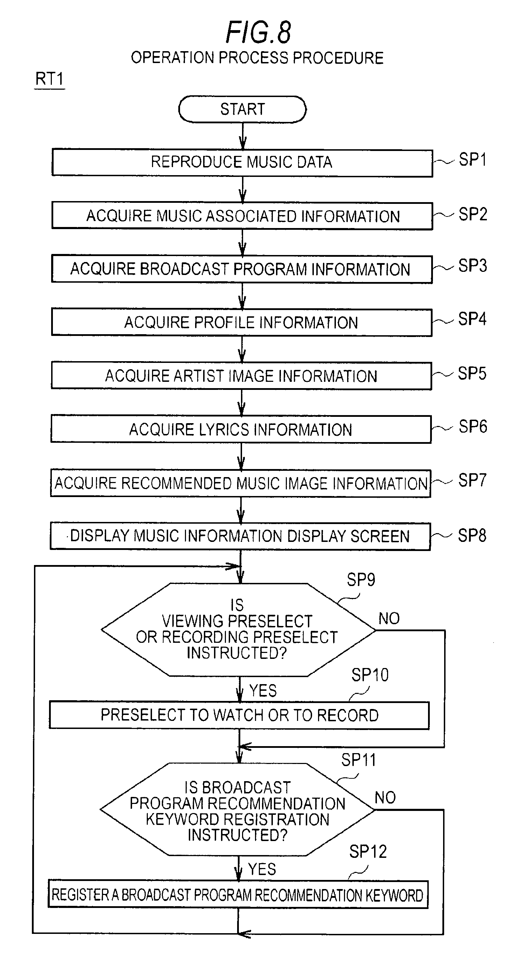

Next, a process procedure in which when the television set 11 is instructed to reproduce a given piece of music through the manipulation of the remote controller RM, music data for the piece of music is reproduced and information on the piece of music is displayed (also referred to as an operation process procedure RT1) will be described with reference to a flowchart shown in Fig. 8. The operation process procedure RT1 is a process procedure executed by the CPU 20 of the television set 11 in accordance with a program read out of the memory 22 or the HDD 23.

When the CPU 20 of the television set 11 is instructed to reproduce a given piece of music through the manipulation of the remote controller RM, the CPU 20 starts the operation process procedure RT1.

In Step SP1, the CPU 20 reproduces music data for the piece of music acquired from any one of the DLNA server 12, the memory card 13, the multi card reader 14, and the music providing server on the Internet 15, and goes to Step SP2.

In Step SP2, the CPU 20 acquires music associated information from the music data, and goes to Step SP3. The music associated information contains the jacket picture, the artist name, the song title, and the album title.

In Step SP3, the CPU 20 searches broadcast program information contained in EPG data stored in the memory 22 or the HDD 23, as the artist name as music associated information is a search condition. As the result of that search, the CPU 20 acquires broadcast program information about a broadcast program related to the artist as music related information, and goes to Step SP4.

In Step SP4, the CPU 20 sends the artist name as music associated information to the encyclopedia providing server 16 through the network I/F 36. By sending the artist name, the CPU 20 allows the encyclopedia providing server 16 to search for profile information, as the sent artist name is a search condition. Then, the CPU 20 acquires profile information retrieved as the search result by the encyclopedia providing server 16 as music related information through the network I/F 36, and goes to Step SP5.

In Step SP5, the CPU 20 sends the artist name as music associated information to the image search server 17 through the network I/F 36. By sending the artist name, the CPU 20 allows the image search server 17 to search for artist image information, as the sent artist name is a search condition. Then, the CPU 20 acquires artist image information retrieved as the search result by the image search server 17 as music related information through the network I/F 36, and goes to Step SP6.

In Step SP6, the CPU 20 sends the artist name and the song title as music associated information to the lyrics providing server 18 through the network I/F 36. By sending the artist name and the song title, the CPU 20 allows the lyrics providing server 18 to search for lyrics information as the sent artist name and song title are search conditions. Then, the CPU 20 acquires lyrics information retrieved as the search result by the lyrics providing server 18 as music related information through the network I/F 36, and goes to Step SP7.

In Step SP7, the CPU 20 sends the artist name and the song title as music associated information to the music retail server 19 through the network I/F 36. By sending the artist name and the song title, the CPU 20 allows the music retail server 19 to search for recommended music image information as the sent artist name and song title are search conditions. Then, the CPU 20 acquires recommended music image information retrieved as the search result by the music retail server 19 as music related information through the network I/F 36, and goes to Step SP8.

In Step SP8, the CPU 20 uses music associated information and music related information to generate a music information display screen 40. Then, the CPU 20 displays the music information display screen 40 on the display 35, and goes to Step SP9.

Consequently, the television set 11 reproduces music data for the piece of music instructed to reproduce through the manipulation of the remote controller RM as well as displays music associated information and music related information that are information on the piece of music on the display 35.

In Step SP9, on the broadcast program detail information display screen 60 displayed through the music information display screen 40, the CPU 20 determines whether the viewing preselect button 61 or the recording preselect button 62 is manipulated through the manipulation of the remote controller RM and viewing preselect or recording preselect is instructed.

Here, if viewing preselect or recording preselect is instructed to obtain a positive result in Step SP9, the CPU 20 goes to Step SP10.

In Step SP10, the CPU 20 preselects to watch or to record a broadcast program displayed on the broadcast program detail information display screen 60, and goes to Step SP11.

On the other hand, if viewing preselect or recording preselect is not instructed to obtain a negative result in Step SP9, the CPU 20 does not preselect to watch or to record any broadcast program, and goes to Step SP11.

In Step SP11, on the option screen 70 displayed through the music information display screen 40, the CPU 20 determines whether the broadcast program recommendation keyword registration menu 71 is manipulated through the manipulation of the remote controller RM and broadcast program recommendation keyword registration is instructed.

Here, if the broadcast program recommendation keyword registration is instructed through the manipulation of the remote controller RM to obtain a positive result in Step SP11, the CPU 20 goes to Step SP12.

In Step SP12, the CPU 20 registers the artist name displayed in the artist name display area 43 on the next previous music information display screen 40 as the broadcast program recommendation keyword. Then, the CPU 20 returns to Step SP9, and again determines whether viewing preselect or recording preselect is instructed through the manipulation of the remote controller RM.

On the other hand, if broadcast program recommendation keyword registration is not instructed through the manipulation of the remote controller RM to obtain a negative result in Step SP11, the CPU 20 does not register any broadcast program recommendation keyword, and returns to Step SP9. Then, the CPU 20 again determines whether viewing preselect or recording preselect is instructed through the manipulation of the remote controller RM.

In addition, in the operation process procedure RT1, when the CPU 20 is instructed to reproduce a new piece of music, the CPU 20 is configured to again start the process to this new piece of music from Step SP1.

In accordance with the operation process procedure RT1 as described above, the CPU 20 reproduces music data for the piece of music instructed to reproduce through the manipulation of the remote controller RM as well as acquires music associated information and music related information that are information on the piece of music, and displays them on the display 35.

### 1-5. Operations and advantages

In the configurations described above, when the television set 11 is instructed to reproduce a given piece of music through the manipulation of the remote controller RM, the television set 11 reproduces music data for the piece of music as well as acquires music associated information added to the music data.

Then, the television set 11 searches broadcast program information in EPG data acquired in advance for broadcast program information about a broadcast program related to the artist of the piece of music, as the artist name as music associated information is a search condition, and acquires broadcast program information retrieved as the search result as music related information.

In addition, the television set 11 sends the artist name as music associated information to the encyclopedia providing server 16 on the Internet 15. By sending the artist name, the television set 11 allows the encyclopedia providing server 16 to search for profile information on the artist profile, as the artist name is a search condition the piece of music. Then, the television set 11 acquires profile information retrieved as the search result by the encyclopedia providing server 16 as music related information.

Moreover, the television set 11 sends the artist name as music associated information to the image search server 17 on the Internet 15. By sending the artist name, the television set 11 allows the image search server 17 to search for artist image information on the artist of the piece of music, as the artist name is a search condition. Then, the television set 11 acquires artist image information retrieved as the search result by the image search server 17 as music related information.

Moreover, the television set 11 sends the artist name and the song title as music associated information to the lyrics providing server 18 on the Internet 15. By sending the artist name and the song title, the television set 11 allows the lyrics providing server 18 to search for lyrics information about the piece of music, as the artist name and the song title are search conditions. Then, the television set 11 acquires lyrics information retrieved as the search result by the lyrics providing server 18 as music related information.

Moreover, the television set 11 sends the artist name and the song title as music associated information to the music retail server 19 on the Internet 15. By sending the artist name and the song title, the television set 11 allows the music retail server 19 to search for recommended music image information on a piece of music to be recommend to the user, as the artist name and the song title are search conditions. Then, the television set 11 acquires recommended music image information retrieved as the search result by the music retail server 19 as music related information.

Then, the television set 11 uses the acquired music associated information and music related information to generate a music information display screen 40, and displays it on the display 35.

With this configuration, the television set 11 can acquire and display music associated information on a piece of music directly associated with music data as well as music related information on a piece of music, the information being not directly associated with the music data.

According to the configurations described above, the television set 11 acquires music associated information associated with music data for a given piece of music. Then, the television set 11 acquires information on the piece of music retrieved from broadcast program information in EPG data and from information on the Internet 15 as music related information, as the music associated information is a search condition. Then, the television set 11 displays the music associated information as well as the piece of music related information on the display 35.

With this configuration, the television set 11 can acquire and display music associated information on the piece of music directly associated with the music data as well as music related information on the piece of music the music data, the information being not directly associated with the music data.

As described above, the television set 11 is capable of offering a large number of items of information on a piece of music to the user.

### 2. Other embodiments

### 2-1. Other embodiment 1

In addition, in the embodiment described above, the CPU 20 of the television set 11 is configured to acquire music associated information from the ID3 tag added to music data in the MP3 format.

The embodiment is not limited to this. Such a scheme may be possible in which even for music data in a different format, as long as the music data has associated information, music associated information is acquired from information associated with the music data. For example, even for music data in the LPCM (Linear Pulse Code Modulation) format, as long as the music data has associated information, music associated information may be acquired from the music data.

### 2-2. Other embodiment 2

In the embodiment described above, the CPU 20 of the television set 11 is configured to acquire music related information retrieved as the artist name and song title as music associated information acquired from music data are search conditions.

The embodiment is not limited to this. Such a scheme may be possible in which when information is music associated information associated with music data, music related information is acquired, which is retrieved as various other items of information are search conditions. For example, music related information may be acquired, which is retrieved as the album title, the sales year, and the genre are search conditions.

### 2-3. Other embodiment 3

In the embodiment described above, the CPU 20 of the television set 11 is configured to acquire artist image information and recommended music image information that are information on a piece of music when instructed to reproduce the piece of music, and display images based on the information on the display 35.

The embodiment is not limited to this. Such a scheme may be possible in which an image based on information on a piece of music is selected, the image being displayed when an instruction is made to reproduce the piece of music, and then the CPU 20 of the television set 11 connects to a server on the Internet 15 and displays sites related to the image.

In other words, such a scheme may be possible in which the CPU 20 acquires recommended music image information that is a jacket picture image of a recommended piece of music to the piece of music to which an instruction is made to reproduce as well as the address of a recommended music retail site from the music retail server 19, for example, and then, the CPU 20 sets the address of the recommended music retail site to the jacket picture image based on the recommended music image information displayed on the display 35, and displays the site when the image is selected through the manipulation of the remote controller RM.

In addition, such a scheme may be possible in which the CPU 20 acquires artist image information that is the address of an image on the Internet 15 related to the artist of a piece of music to which an instruction is made to reproduce as well as the address of a site on which the image appears from the image search server 17, for example, and then the CPU 20 sets the address of the site on which the image appears to the image based on artist image information displayed on the display 35, and displays the site when the image is selected through the manipulation of the remote controller RM.

### 2-4. Other embodiment 4

In the embodiment described above, the CPU 20 of the television set 11 is configured to search information about broadcast program to be scheduled for broadcasting contained in EPG data as music associated information is a search condition and acquire broadcast program information on the artist.

The embodiment is not limited to this. Such a scheme may be possible in which the CPU 20 of the television set 11 also stores broadcast program information about a broadcast program when recording the broadcast program to be broadcast, searches for broadcast program information about the recorded broadcast program as music associated information is a search condition, and acquires broadcast program information on the artist.

In other words, the CPU 20 also stores EPG data of a broadcast program in the HDD 23 when storing and recording video and audio data of a digital broadcast program in the HDD 23. As an artist name that is a part of the acquired music associated information is a search condition, for example, the CPU 20 searches EPG data of the recorded broadcast programs stored in the HDD 23 for broadcast program information on the artist.

As described above, the television set 11 also acquires and displays broadcast program information about broadcast programs recorded by the user, the information on the artist of the piece of music, whereby a large number of items of music related information can be offered to the user.

In the embodiment described above, the CPU 20 of the television set 11 is configured to send music associated information to the encyclopedia providing server 16, the image search server 17, the lyrics providing server 18, and the music retail server 19 on the Internet 15 through the network I/F 36, and acquire music related information from these servers.

The embodiment is not limited to this. Such a scheme may be possible in which the CPU 20 of the television set 11 sends music associated information to various servers on the Internet 15 through the network I/F 36. With this configuration, such a scheme may be possible in which the CPU 20 of the television set 11 allows the server to search information on the Internet 15 as the music associated information is a search condition, and then the CPU 20 of the television set 11 acquires music related information retrieved as the search result by the server through the network I/F 36.

### 2-5. Other embodiment 5

In the embodiment described above, the CPU 20 of the television set 11 is configured to acquire EPG data from digital broadcast signals received through the antenna 25. The embodiment is not limited to this. Such a scheme may be possible in which the CPU 20 of the television set 11 acquires EPG data from a server that provides EPG data on the Internet 15 (not shown) through the network I/F 36.

### 2-6. Other embodiment 6

In the embodiment described above, the CPU 20 of the television set 11 is configured to display broadcast program information, profile information, artist image information, lyrics information, and recommended music image information, which are the acquired music related information, in predetermined areas as shown in the music information display screen 40 (Fig. 4).

The embodiment is not limited to this. Such a scheme may be possible in which when the CPU 20 of the television set 11 has information which is difficult to acquire among the items of information described above, the CPU 20 displays different information in the display area for information that is difficult to acquire. For example, when it is difficult for the CPU 20 of the television set 11 to acquire artist profile information, the CPU 20 may display images not fully displayed in the artist image display area 47 in the profile display area 46 on the music information display screen 40.

In addition, the embodiment is not limited to this. The CPU 20 of the television set 11 may display the acquired music related information in various other arrangements, sizes, and forms.

### 2-7. Other embodiment 7

In the embodiment described above, when the broadcast program recommendation keyword registration menu 71 is selected and determined through the manipulation of the remote controller RM, the CPU 20 of the television set 11 is configured to register the artist name displayed on the music information display screen 40 as the broadcast program recommendation keyword.

The embodiment is not limited to this. The television set 11 may register various other keywords as the broadcast program recommendation keyword.

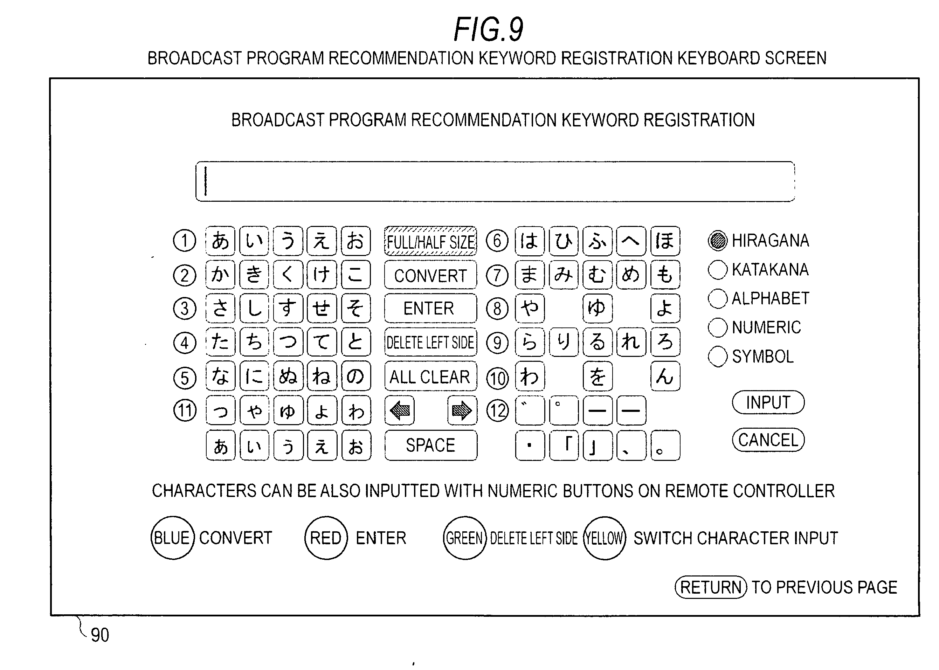

In this case, a broadcast program recommendation keyword registration keyboard menu (not shown) is provided on the option screen 70. When the menu is selected and determined through the manipulation of the remote controller RM, the CPU 20 of the television set 11 displays a broadcast program recommendation keyword registration keyboard screen 90 shown in Fig. 9. Then, the CPU 20 of the television set 11 registers a keyword inputted through the manipulation of the remote controller RM as a broadcast program recommendation keyword.

With this configuration, when the option screen 70 is displayed, the television set 11 allows the user to make a selection to register an artist name displayed on the music information display screen 40 or a different keyword as a broadcast program recommendation keyword.

### 2-8. Other embodiment 8

In the embodiment described above, when instructed to reproduce a given piece of music, the CPU 20 of the television set 11 is configured to acquire and display music associated information and music related information that are information on that piece of music. The embodiment is not limited to this. Such a scheme may be possible in which the CPU 20 of the television set 11 acquires and displays music associated information and music related information at various timings, such as at the timing at which a given piece of music is selected through the manipulation of the remote controller RM, for example.

### 2-9. Other embodiment 9

In the embodiment described above, the embodiment of the invention is adapted when information on a piece of music is acquired and displayed. The embodiment is not limited to this. The embodiment of the invention may be adapted when information on various contents is acquired and displayed, such as when information on video recorded on a recording medium such as a DVD (Digital Versatile Disc), for example, is acquired and displayed.

### 2-10. Other embodiment 10

In the embodiment described above, the CPU 20 of the television set 11 is configured to acquire music related information in order of broadcast program information, profile information, artist image information, lyrics information, and recommended music image information in the operation process procedure RT1. Items of information may be acquired in order of various manners, not limited to this order.

In the embodiment described above, the CPU 20 of the television set 11 is configured to reproduce music data, acquire music associated information and music related information, and then display the music information display screen 40 in the operation process procedure RT1. The embodiment is not limited to this. Such a scheme may be possible in which the television set 11 acquires music associated information and music related information, displays the music information display screen 40, and then reproduces music data.

### 2-11. Other embodiment 11

In the embodiment described above, it is configured to store the program for executing the operation process of the television set 11 in the memory 22 or the HDD 23 of the television set 11.

The embodiment is not limited to this. Such a scheme may be possible in which the program is recorded on a predetermined recording medium such as a memory card or a DVD in advance, and the CPU 20 of the television set 11 reads the program out of the recording medium and executes it. In addition, such a scheme may be possible in which the program is downloaded from a predetermined server on the Internet 15, and installed in the memory 22 or the HDD 23.

### 2-12. Other embodiment 12

In the embodiment described above, it is configured in which the CPU 20 is provided as a content associated information acquiring unit, a content related information acquiring unit, a display control unit, and a broadcast program information searching unit in the television set 11 as an information processing apparatus. In addition, it is configured to provide the network I/F 36 as a content related information acquiring unit and a broadcast program information acquiring unit in the television set 11. Moreover, it is configured to provide the display 35 as a display unit, the antenna 25, the tuner 26, the descrambler 27, and the demultiplexer 28 as a broadcast program information acquiring unit, and the audio decoder 29 as a reproducing unit in the television set 11. Moreover, it is configured to provide the encyclopedia providing server 16, the image search server 17, the lyrics providing server 18, and the music retail server 19, which are servers on the Internet 15 as a searching unit.

The embodiment is not limited to this. The individual functional units of the television set 11 may be configured of various other pieces of hardware or software as long as similar functions are provided. For example, each of the content associated information acquiring unit, the content related information acquiring unit, the display control unit, and the broadcast program information searching unit may be implemented with separate pieces of hardware.

In addition, the embodiment is not limited to this. The embodiment of the invention may be adapted to various other information processing apparatuses such as a personal computer and a mobile phone as long as they are an information processing apparatus having the similar functions.

In addition, the embodiment is not limited to this. Various other servers may be used for the embodiment of the invention as long as they are a server on the Internet 15 having the similar functions.

### 2-13. Other embodiment 13

Moreover, the embodiment of the invention is not limited to the embodiment and the other embodiments 1 to 12 described so far. In other words, the applicable scope of the embodiment of the invention also includes forms freely combining a part or all of the embodiment and the other embodiments 1 to 12 described so far, or forms partially extracting elements from the embodiment and the other embodiments 1 to 12.

For example, the other embodiments 8 and 9 may be combined. With this configuration, when a given piece of video is selected, information on the piece of video can be acquired and displayed.

The embodiment of the invention can be widely used in television sets having the music reproducing function, for example.

The present application contains subject matter related to that disclosed in Japanese Priority Patent Application JP 2008-286674 filed in the Japan Patent Office on November 7, 2008, the entire contents of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus comprising:
a content associated information acquiring unit that acquires content associated information on a content associated with content data that is data for the content;
a content related information acquiring unit that allows a predetermined searching unit to search information not associated with the content data for information on the content, as content associated information acquired by the content associated information acquiring unit is a search condition, and acquires information retrieved as a result of the search from the searching unit as content related information;
a display control unit that displays content associated information acquired by the content associated information acquiring unit and content related information acquired by the content related information acquiring unit on a display unit; and
a keyword registration unit that registers at least a part of the content associated information displayed on the display unit as a keyword for searching a recommended content in accordance with an instruction by a user.

2. The information processing apparatus according to claim 1, wherein the content related information acquiring unit sends content associated information acquired by the content associated information acquiring unit to a server on the Internet as the searching unit, allows the server to search information on the Internet for information on the content, the information being not associated with the content data, as the content associated information is a search condition, and acquires information retrieved as a result of the search from the server as content related information.

3. The information processing apparatus according to claim 2, wherein the content is a piece of music, and the content data is music data.

4. The information processing apparatus according to claim 3, wherein the content related information acquiring unit sends content associated information acquired by the content associated information acquiring unit to the server, allows the server to search information on the Internet for profile information on an artist profile of the piece of music as information on the piece of music, as the content associated information is a search condition, and acquires information retrieved as a result of the search from the server as content related information.

5. The information processing apparatus according to claim 3, wherein the content related information acquiring unit sends content associated information acquired by the content associated information acquiring unit to the server, allows the server to search information on the Internet for image information on an artist of the piece of music as information on the piece of music, as the content associated information is a search condition, and acquires information retrieved as a result of the search from the server as content related information.

6. The information processing apparatus according to claim 3, wherein the content related information acquiring unit sends content associated information acquired by the content associated information acquiring unit to the server, allows the server to search information on the Internet for lyrics information indicating lyrics of the piece of music, as information on the piece of music, as the content associated information is a search condition, and acquires information retrieved as a result of the search from the server as content related information.

7. The information processing apparatus according to claim 3, wherein the content related information acquiring unit sends content associated information acquired by the content associated information acquiring unit to the server, allows the server to search information on the Internet for recommended music information on a recommended piece of music to be recommended to a user as information on the piece of music, as the content associated information is a search condition, and acquires information retrieved as a result of the search from the server as content related information.

8. The information processing apparatus according to claim 2, further comprising:
a broadcast program information acquiring unit that acquires broadcast program information from a broadcast signal or from an external server; and
a broadcast program information searching unit as the searching unit,
wherein the content related information acquiring unit allows the broadcast program information searching unit to search broadcast program information acquired by the broadcast program information acquiring unit, the broadcast program information being not associated with the content data, for broadcast program information on an artist of the piece of music as information on the piece of music, as content associated information acquired by the content associated information acquiring unit is a search condition, and acquires information retrieved as a result of the search from the broadcast program information searching unit as content related information.

9. The information processing apparatus according to claim 1, further comprising:
a reproducing unit that reproduces the content data,
wherein the display control unit displays content associated information acquired by the content associated information acquiring unit and content related information acquired by the content related information acquiring unit on the display unit when the reproducing unit reproduces the content data.

10. An information processing method comprising the steps of:
acquiring content associated information on a content associated with content data that is data for the content by a content associated information acquiring unit;
allowing a predetermined searching unit to search information not associated with the content data for information on the content, as content associated information acquired by the content associated information acquiring unit is a search condition, and acquiring information retrieved as a result of the search from the searching unit as content related information by a content related information acquiring unit;
displaying on a display unit content associated information acquired by the content associated information acquiring unit and content related information acquired by the content related information acquiring unit by a display control unit; and
registering at least a part of the content associated information displayed on the display unit as a keyword for searching a recommended content in accordance with an instruction by a user.

11. A computer-readable recording medium storing an information processing program allowing a computer to execute the steps of:
acquiring content associated information on a content associated with content data that is data for the content by a content associated information acquiring unit;
allowing a predetermined searching unit to search information not associated with the content data for information on the content, as content associated information acquired by the content associated information acquiring unit is a search condition, and acquiring information retrieved as a result of the search from the searching unit as content related information by a content related information acquiring unit;
displaying on a display unit content associated information acquired by the content associated information acquiring unit and content related information acquired by the content related information acquiring unit by a display control unit; and
registering at least a part of the content associated information displayed on the display unit as a keyword for searching a recommended content in accordance with an instruction by a user.
